(19) Europäisches Patentamt
European Patent Office
Office européen des brevets

(11) **EP 4 016 363 A1**

(12) **EUROPEAN PATENT APPLICATION**

(43) Date of publication:
**22.06.2022 Bulletin 2022/25**

(21) Application number: **20306655.0**

(22) Date of filing: **21.12.2020**

(51) International Patent Classification (IPC):
**G06F 30/20** $^{(2020.01)}$        **G06F 30/23** $^{(2020.01)}$

(52) Cooperative Patent Classification (CPC):
**G06F 30/20; G06F 30/23**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dassault Systèmes**
**78140 Vélizy-Villacoublay (FR)**

(72) Inventors:
• **BRIFAULT, Lucas**
**78140 Vélizy-Villacoublay (FR)**
• **GARNIER, David-Henri**
**78140 Vélizy-Villacoublay (FR)**

(74) Representative: **Bandpay & Greuter**
**30, rue Notre-Dame des Victoires**
**75002 Paris (FR)**

(54) **TOPOLOGY OPTIMIZATION WITH REACTION-DIFFUSION EQUATIONS**

(57)    A computer-implemented method for designing a 3D modeled object representing a mechanical part, comprising the step of providing a 3D finite element mesh and associated data. The data associated to the 3D finite element mesh comprise one or more forces each forming a respective load case, one or more boundary conditions, and one or more parameters related to a material. The method further comprises performing a topology optimization based on the finite element mesh and on the data associated to the finite element mesh. The topology optimization is performed among candidate material distributions each corresponding to a solution of a system of reaction-diffusion equations.

**Description**

**TECHNICAL FIELD**

The disclosure relates to the field of computer programs and systems, and more specifically to a method, system and program for designing a 3D modeled object representing a mechanical part formed in a material.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Some of these systems provide functionalities that employ topology optimization. Topology optimization is a computer-implemented technique bridging the fields of product design and physical simulation. It is applied for designing a modeled object representing a mechanical part formed in a material, subject in use to loads and having one or more constrained boundaries. This technique focuses on automatically generating optimized generative designs based on modifying their physical properties and behavior typically simulated through Finite Element Analysis (FEA). More specifically, topology optimization works by providing a Finite Element (FE) mesh for example by discretizing a design space in small elements, and data associated to the mesh. The technique then finds the optimal distribution and layout of material in the given discrete space by iteratively finding the most efficient elements with respect to a given objective function (e.g., related to the stiffness of the design) and a set of constraints (e.g., related to the total amount of allowable material).

The following documents relate to this field and are referred to hereunder:

[1] Andreassen, Erik, et al. "Efficient topology optimization in MATLAB using 88 lines of code." Structural and Multidisciplinary Optimization 43.1 (2011): 1-16.
[2] Allaire, Grégoire. "Shape optimization by the homogenization method." Vol. 146. Springer Science & Business Media, 2009.
[3] Bendsoe, Martin Philip, and Ole Sigmund. "Topology optimization: theory, methods, and applications." Springer Science & Business Media, 2004.

Within this context, there is still a need for an improved method for designing a 3D modeled object representing a mechanical part formed in a material.

**SUMMARY**

It is therefore proposed a computer-implemented method for designing a 3D modeled object. The 3D modeled object represents a mechanical part formed in a material. The method comprises providing a 3D finite element mesh, and data associated to the 3D finite element mesh. The data associated to the 3D finite element mesh comprise one or more forces, one or more boundary conditions, and one or more parameters related to the material. Each force forms a respective load case. The data associated to the 3D finite element mesh further comprise a global quantity constraint relative to a global quantity of the material in the finite element mesh. The method further comprises performing a topology optimization based on the finite element mesh and on the data associated to the finite element mesh. The topology optimization is performed among candidate material distributions. Each candidate material distribution corresponds to a solution of a system of reaction-diffusion equations.

The method may comprise one or more of the following:

- each candidate material distribution is equal to the application of a mapping function to the solution of the system of reaction-diffusion equations;
- the mapping function is a shape-preserving function mapping the solution of the system of reaction-diffusion equations to an interval of material densities, the candidate material distributions thereby taking values in said interval;
- the system of reaction-diffusion equations has state variables, and the shape-preserving function is a monotonous function of at least one state variable;
- the shape-preserving function is a linear function of one of the state variables;
- the system of reaction-diffusion equations comprises one or more parameters which are each a free variable of the topology optimization, each parameter belonging to a restricted interval;
- for each value of the one or more parameters, the system of reaction-diffusion equations represents the evolution of the state variables, from an initial state at an initial time, to a final state at a final time, the solution of the system of equations being equal to the final state of the state variables;
- the value of each of the one or more parameters depends on time and/or space;
- the system of reaction-diffusion equations has state variables, and the topology optimization comprises a plurality of iterations until convergence, each iteration comprising: setting a value for the initial state of the state variables at the initial time; and computing a value of the state variables and a value of costate variables over the 3D finite element mesh and over a plurality of time steps between an initial time and a final time;
- at the first iteration, the value of the initial state for each state variable is set to a predetermined value, and at other iterations than first iteration, the value of the initial state for each variable is set to the value of the final state of the corresponding state variable of the preceding iteration;
- system of reaction-diffusion equations is a Gray-Scott Model; and/or
- the Gray-Scott Model has a reaction term, and at least one parameter of the reaction term in the Gray-Scott Model is a free variable of the topology optimization.

It is further provided a computer program comprising instructions for performing the method.

It is further provided a computer readable storage medium having recorded thereon the computer program.

It is further provided a system comprising a processor coupled to a memory and a graphical user interface, the memory having recorded thereon the computer program.

## BRIEF DESCRIPTION OF THE DRAWINGS

Embodiments will now be described, by way of non-limiting example, and in reference to the accompanying drawings, where:

- FIG. 1 shows an example of a graphical user interface of the system;
- FIG. 2 shows an example of the system; and
- FIG.s 3 to 6 illustrate the method.

## DETAILED DESCRIPTION

It is hereby proposed a computer-implemented method for designing a 3D modeled object. The 3D modeled object represents a mechanical part formed in a material. The method comprises providing a 3D finite element mesh, and data associated to the 3D finite element mesh. The data associated to the 3D finite element mesh comprise one or more forces, one or more boundary conditions, and one or more parameters related to the material. Each force forms a respective load case. The data associated to the 3D finite element mesh further comprise a global quantity constraint relative to a global quantity of the material in the finite element mesh. The method further comprises performing a topology optimization based on the finite element mesh and on the data associated to the finite element mesh. The topology optimization is performed among candidate material distributions. Each candidate material distribution corresponds to a solution of a system of reaction-diffusion equations.

This constitutes an improved method for designing a 3D modeled object representing a mechanical part formed in a material, and in particular to achieve an improved structure of the mechanical part.

The method of topology optimization is based on the data representing conditions of use of the mechanical part, including one or more of forces and one or more boundary conditions. This improves the physical performance of the mechanical part in response to the forces and to the applied kinematic constraints in practice. This is particularly and objectively relevant in industrial design and allows the designed 3D modeled object to be manufactured in the real world.

Furthermore, the method optimizes the topology with respect to some mechanical property by searching among candidates which have the same patterns as solutions of a system of reaction-diffusion equations. As known per se in the field of mathematics and biology, systems of reaction-diffusion equations may produce complex patterns as their solutions. Thus, obtaining a structure with a pattern of a solution of a system of reaction-diffusion equations allows creation of a porous structure as the output of the topology optimization. Porous structures are known to be more robust to perturbations in the exerted one or more forces or one or more kinematic constraints. This forms an improved solution for the practical use of the mechanical part. In other words, the restriction of the topology optimization to candidates which correspond to (i.e. present the same pattern as) solution of a system of reaction-diffusion equations allows reaching a structure which, in terms of porosity and pattern, is more robust to variations around the load cases and to the applied kinematic constraints represented by the provided data (forces and boundary conditions).

In addition, performing the topology optimization among material distribution candidates corresponding to a solution of a system of reaction-diffusion equation allows exploring the space of possible 3D shapes more efficiently compared to the standard topology optimization, and in particular reduce the risk of converging to a local minimum.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

The method generally manipulates modeled objects. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is additionally meant any system adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g. representing a product such as a part or an assembly of parts, or possibly an assembly of products. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 3D modeled object may represent the geometry of a product to be manufactured in the real world subsequent to the completion of its virtual design with for instance a CAD software solution or CAD system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

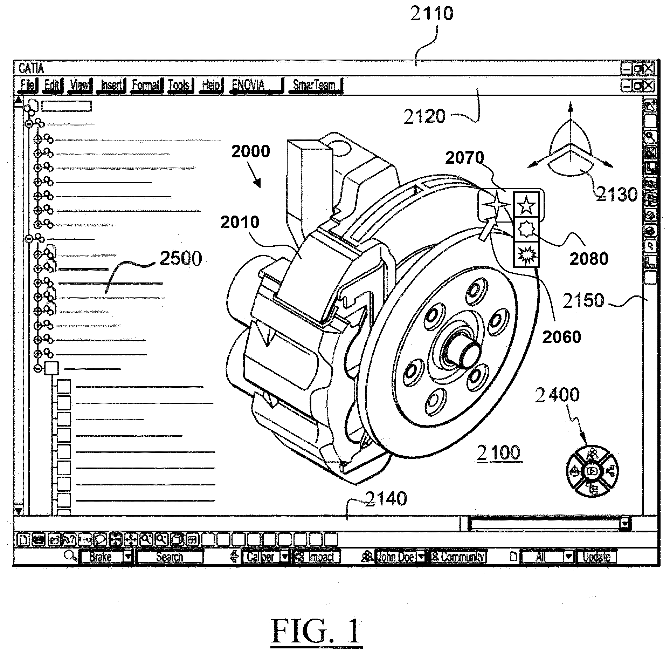

FIG. 1 shows an example of the GUI of the system, wherein the system is a CAD system. In particular, the output of the method of topology optimization may be imported into the GUI 2100 so that the user is able to perform the design editions thereon. The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

It is also proposed a computer program comprising instructions for performing the method. The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

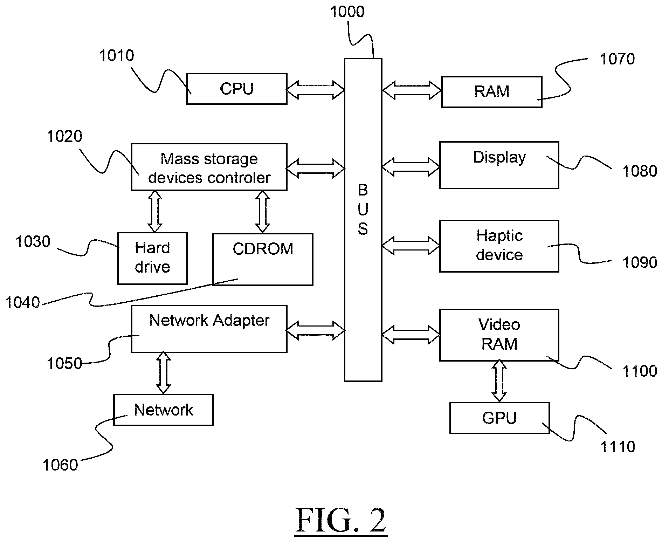

FIG. 2 shows an example of the system, wherein the system is a client computer system, *e.g.*, a workstation of a user. The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magnetooptical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

"Designing a 3D modeled object" designates any action or series of actions which is at least part of a process of elaborating a 3D modeled object. Thus, the method may comprise creating the 3D modeled object from scratch. Alternatively, the method may comprise providing a 3D modeled object previously created, and then modifying the 3D modeled object. For example, the method may comprise performing the topology optimization and obtain a 3D modeled object, and then add said 3D modeled object to an existing assembly.

The method may be included in a manufacturing process, which may comprise, after performing the method, producing a physical product corresponding to the modeled object. In any case, the modeled object designed by the method may represent a manufacturing object. The modeled object may thus be a modeled solid (i.e. a modeled object that represents a solid). The manufacturing object may be a product, such as a part, or an assembly of parts. Because the method improves the design of the modeled object, the method also improves the manufacturing of a product and thus increases productivity of the manufacturing process.

In fact, the method designs modeled objects which are three-dimensional. The method is thus for solid modeling, i.e. the method yields a solid (e.g., 3D closed volume) which represents the mechanical part in 3D as it is in the real world once manufactured. The method thus belongs to the field of manufacturing CAD, as the method does not perform a mere 2D design of an object that will never be manufactured in the industry, but outputs a solid representing a 3D mechanical part, the output being suitable for use in subsequent steps of a manufacturing process (*e.g.*, further design actions, tests, simulations and/or manufacturing).

The method comprises providing inputs of the topology optimization, for example via user-interaction.

The inputs of the topology optimization include a 3D finite element (FE) mesh or FEM. The 3D FE mesh represents a space containing the modeled object to be designed. The space containing the modeled object is called the "design space". The FE mesh may be regular or irregular. A regular FE mesh allows easier computations during the topology optimization. The FE mesh may be of any type, for example with each finite element being a tetrahedron or a hexahedron. Providing the FE mesh may comprise defining a design space and a meshing of the design space. The method may comprise displaying the FE mesh to the user, and, by the user, defining other inputs of the topology optimization, *e.g.*, including by graphical user-interaction on the displayed FE mesh.

By "graphical user-interaction" with respect to defining an element, it is hereby meant any user-interaction where the designer employs a haptic system (*e.g.*, a mouse or a touch device such as a sensitive/touch screen or a sensitive/touch pad) to activate one or more locations of the display unit and where the element is to be positioned. Activating a location of a scene may comprise positioning thereon the cursor of a mouse or performing a touch thereon. Substantially real-time after the activation, a representation of the defined element may be displayed.

The inputs of the topology optimization further comprise data associated to the FE mesh which depend on the mechanical part that the user wants to design.

These associated data include one or more parameters related to the material, in other words data representing the material in which the mechanical part is formed (e.g. including the Young's modulus and/or the Poisson's ratio of the material or any information allowing computation thereof, such as specifications of the material). The user may specify a material, for example by selection from a list, and/or the system may determine automatically the material parameters and/or propose selection thereof to the user, for example based on one or more formulas and/or on a database. The material can be any material, for example a solid and/or isotropic material, such as a metal (*e.g.*, steel, silver, gold, titanium), a plastic (nylon, ABS, polycarbonates, resins), a ceramic or a composite for example.

The associated data may further include a global quantity constraint. The global quantity constraint is relative to a global quantity of the material in the 3D FE mesh. In other words, the global quantity constraint restricts values of the total quantity of the material in the whole 3D FE mesh. The global quantity constraint may for example be provided as a bound of the fraction of the (whole) 3D FE mesh which can be filled with the material, for example an upper bound for said fraction. Alternatively, the global quantity constraint may, rather than a bound, provide a value which has to be reached. The topology optimization may however optimize an objective function which tends to use as much material as available in the optimized result, rendering such an equality constraint equivalent to an upper bound constraint. In all cases, the fraction may be a volume fraction (also referred to as GVC in such a case, as in "Global Volume Constraint"). In other examples, the global quantity constraint may involve values representing weight of the material.

As known per se from the field of topology optimization, the associated data further include data representing conditions of use of the mechanical part and based on which the topology optimization is able to optimize the mechanical part model in view of such foreseen use.

The associated data notably include one or more forces. Each force forms a respective load case. In other words, the associated (digital) data include (digital) vectors (*e.g.*, with magnitudes in Newtons or in a multiple thereof) each applicable and linked to one or more finite elements of the FE mesh. These (digital/virtual) forces represent real-world loads to which the mechanical part will be subject when used. In other words, for each one or more finite elements of the FE mesh for which a respective force is present in the data, the data represent the fact that material of the mechanical part at locations corresponding to said one or more finite elements will be subject to corresponding loads in the real-world. But since a mechanical part may theoretically be subject to an infinite number of loads, not all loads are represented by the digital forces present in the data. The digital forces only represent a restriction of the whole set of loads, for example most significant ones and/or most representative ones. The digital forces may be determined for each modeling problem and may be chosen to be the largest (*i.e.*, highest magnitude) real-world forces the object may be subject to during its lifetime, since these real-world forces tend to cause the largest deformations and mechanical stresses. As known per se from the field of manufacturing CAD, a set of one or more real-world forces exerted at the same time may be grouped in a so-called load-case. When there exist two or more load cases, they are not necessarily applied at the same time on the mechanical part and cannot accumulate/compensate each other. An industrial problem may in examples have between one and a dozen load-cases. In examples, the user may select via graphical user-interaction finite elements of the FE mesh, and then specify a force applicable thereto.

In other words, a load case may comprise a set of real-world loads/forces that act on a physical object at one time. A model can experience different load cases at different times (for example, consider a building that is subjected to gusts of wind). Thus, a digital force in the associated data may represent several real-world forces applied to the physical object at a same time, i.e., a load case.

The associated data also include one or more boundary conditions. A boundary condition is a constraint on the boundary of the 3D modeled object. Each boundary condition applies and is linked to one or more finite elements of the mesh and represents a respective constraint on the boundary to which the mechanical part is subject in use. The boundary conditions may be equivalently referred to as kinematic constraints.

In other words, each boundary condition represents the fact that material of the mechanical part at locations corresponding to said one or more finite elements is subject to a constraint on its displacement, for example using Dirichlet boundary conditions. An element may have its displacement constrained (among others) along a plane, along a curve, along/around an axis, or to/around a point, and/or its displacement may be only constrained only in translation, only in rotation, or in both translation and rotation. In the case of a displacement constrained to a point both in translation and rotation, the element is fixed in 3D space and is said to be "clamped". An element may however have its displacement constrained in translation along a plane but move freely on said plane (*e.g.*, if it belongs to an object mounted on a bearing), in translation along an axis but move freely on said axis (*e.g.*, in a piston), or in rotation around an axis (*e.g.*, joints of a robotic arm).

In examples, the boundary conditions represent all the constrained boundaries. In other words, for each finite element of the FE mesh which is intended to eventually contain material that is constrained (*e.g.,* to remain fixed), a boundary (*e.g.,* clamping) condition may be associated to integrate this fact in the topology optimization. In examples, the user may select via graphical user-interaction finite elements of the FE mesh, and then specify that boundary conditions are applicable thereto.

In examples, the one or more constrained boundaries of the mechanical part comprise or consist of one or more fixed boundaries (i.e. the material at said one or more boundaries cannot move), and the corresponding one or more boundary conditions are clamping conditions.

The forces and boundary conditions may be obtained by mechanical tests, for example by measuring the value of a force applied on a mechanical part on a certain area. A user, *e.g.*, a designer, may also calculate them based on static or dynamic calculations, based on recommended values by design standards, or based on numerical simulations, as known in the field of engineering design.

The topology optimization may as widely known comprise optimizing (*e.g.*, automatically) an objective function based on the inputs. "Based on the inputs" means that the optimizing takes into account the inputs, including the 3D finite element mesh and the data associated to the 3D finite element mesh, when performing the topology optimization. For example, the topology optimization may take the forces and boundary conditions for a given input specification and apply them to the elements and nodes of the FE mesh. The topology may assemble the global stiffness matrix and solve for the nodal displacements of the structural equilibrium. In other words, the topology optimization may compute the deformation of the structure in its current state for the applied forces and boundary conditions.

The objective function may represent any mechanical characteristic to be optimized. The topology optimization may in particular maximize stiffness. The objective function may for that be the compliance function. The compliance is, for a structure, the inverse of the stiffness of the structure. The compliance thus encapsulates the amount of deformation of the structure, considering specified load scenarios and fixed boundary conditions. Equivalently, the compliance represents the strain energy stored in the structure, considering said load scenarios and boundary conditions. Therefore, when the optimization process minimizes the compliance, this corresponds to maximize the stiffness of the design for a given mass.

The topology optimization is performed among candidate material distributions. Each candidate material distribution corresponds to a solution of a system of reaction-diffusion equations. Each candidate material distribution may be a distribution (i.e. layout) of quantity (*e.g.*, volume fraction) of material over the FE mesh. By "corresponds to a solution of a system of reaction-diffusion equations", it is meant that each candidate material distribution depends on a solution of the system of reaction-diffusion equations. The system of reaction-diffusion equations may be defined on the space represented by the FE mesh and be discretized on the FE mesh. The discretization of the system of equation on the FE mesh may be performed according to any known method in the literature, for example by the first order, or higher order finite element or finite difference discretization. The solution of the system of equations may be obtained as the discretized numerical solution of the system of reaction-diffusion on the FE mesh, according to any well-known method for numerical solution of equations.

As known *per* se, a topology optimization may explore the candidate material distributions by varying the material quantity (e.g. volume fraction) in each element of FE mesh, as the design variables, to optimize the objective function. In examples, the free variable of the objective function may be directly the distribution (i.e., layout) of quantity (e.g., volume fraction) of material over the FE mesh. The objection function may depend on the material parameters (i.e., fixed variables of the objective function may involve the material parameters) and the optimization may be performed under constraint (i.e., constrained optimization), including the global quantity constraint. Each element of the FE mesh has a given relative density value defining whether it is empty or full of material, respectively defined by the values "0" and "1". Additionally, in order to make the optimization problem continuous, the general topology optimization may allow the elements to take any value between 0 and 1. This may be referred to as "relaxation". Since the interpretation of elements with intermediate densities can be ambiguous, the general topology optimization workflow may introduce the penalization approach which forces intermediate elemental densities to be globally less efficient for the structural behavior than elements with the lower and upper bound of 0 or 1, respectively. The optimization may be performed according to any algorithm, for example an iterative algorithm.

In case the material quantity is a volume fraction of the material, the optimization process yields a distribution of finite-element-wise material volume fractions. In such a case, the topology optimization or the method may comprise a further step of filtering (e.g. automatically), that is, determining for each finite element whether it is (fully) filled with material or not based on such volume fraction distribution. For example, this may be based on a comparison with a (e.g. predetermined) threshold (e.g. higher than 0.1 or 0.2 and/or lower than 0.9 or 0.8, e.g. of the order of 0.5), a finite element being considered as fully filled with material (respectively totally empty) if the volume fraction resulting from the optimization is higher (respectively lower) than the threshold. The method may in examples further comprise computing (e.g., automatically) a 3D modeled object, such as a boundary representation (B-Rep) model, based on the result. For example, the method may compute swept volumes based on and along series of finite elements resulting from the optimization and/or the filtering. The output of the topology optimization is the geometry of the optimized design which complies as much as possible with the input specifications.

The method goes beyond such a general topology optimization by performing the topology optimization among candidate material distributions wherein each material distributions corresponds to a solution of a system of reaction-diffusion equations. By "corresponds to", it is meant that the candidate material distributions must present a pattern structure alike a solution of the system of reaction-diffusion equations.

The correspondence may be involved in the general topology optimization using a constrained optimization in which the correspondence is added as a constraint. This restricts the exploring space for the optimization problem. Thanks to this restriction, the topology optimization better avoids getting stuck in local minima, thus improving accuracy. Further, this specific restriction allows reaching a final structure which is more porous. This improves the performance of the structure in perturbation around the provided data to the method of topology optimization, for example in the exerted one or more forces or one or more kinematic constraints. This forms an improved solution for the practical use of the mechanical part.

Each candidate material distribution may be equal to the application of a mapping function to the solution of the system of reaction-diffusion equations. The system of reaction-diffusion equations may be a transient, i.e., time-dependent system of equations. The transient system of equations may reach a steady state in a sufficiently long time. By "steady state" it is meant a state which is the terminal state after which the solution of the systems of equation does not change in time. The mapping function may accept one or more input arguments. The input arguments may be one or more values of the solution of the system of reaction-diffusion equation at a particular time instant of a transient system of reaction-diffusion equations or the one or more values of the solution of the transient system of reaction-diffusion equations after reaching the steady state.

In examples, the mapping function may be a shape-preserving function mapping the solution of the system of one or more reaction-diffusion equations to an interval of material densities. The candidate material distributions thereby take values in said interval. Said interval may for example be the unit interval [0,1]. A shape preserving function significantly preserves the pattern of the input variables. Thus, the use of shape-preserving function as such ensures that each candidate material distribution corresponds to a solution of a system. By "pattern", it is meant the shapes produced by drawing the solutions of the system of equation in a space domain. Shape-preserving functions are smooth but do not have too strong smoothing, i.e., homogenization effects so not to destroy the pattern of the input. In examples, the shape-preserving function may comprise applying rotation and/or translation on one or more of the input variables.

The system of reaction-diffusion equations may have state variables, as known per se from research on system of reaction-diffusion equations. In other words, the state variables are the unknowns in the system of reaction-diffusion equations. For a system of partial differential equations (PDEs), the state variables are functions in the space domain and, in examples where the system of equations is transient, in the time domain. The method may be provided by some initial and/or boundary conditions for the system of reaction-diffusion equations. The state variables define the solution of the system of equations if they satisfy the equations as well the initial and/or boundary conditions. In examples, the boundary conditions for the system of equations may be any combination of Dirichlet, Neumann, or Robin boundary conditions. The solution of this system may be unique by setting the initial and/or boundary conditions.

In examples, the shape-preserving function a monotonous function of at least one state variable. Alternatively or additionally, the shape-preserving function may comprise a linear combination of one or more functions, each function belonging to one of the following classes of function

- linear combination of one or more state variables;
- polynomial function with respect to each state variable;
- trigonometric function with respect to each state variable;
- hyperbolic functions, preferably tanh function; and
- rational functions.

In particularly efficient examples, the shape-preserving function is a linear function of one of the state variables. Indeed, any non-zero linear function is shape-preserving, as known. The linear function value may be proportional to the value of said sate variable with a coefficient. The coefficient may be chosen such that the candidate material distributions take values in the interval of material densities. In particular examples where said interval is the unit interval and if the state variable value is bounded by being in an interval (e.g., $[u_{min}, u_{max}]$), the coefficient may be the unity divided by the length of the interval $\left(e.g., \dfrac{1.0}{u_{max}-u_{min}}\right).$

Examples of the method are now discussed.

The method may find the best material distribution across a certain space domain $\Omega$ as the design space. The best material distribution may minimize an energy functional $\mathcal{J}$ under some constraints C as

$$\min_{\chi:\Omega\to\{0,1\}} \mathcal{J}(\chi) \qquad (TO)$$
$$s.t. \quad C(\chi) \leq b$$

with $\chi: \Omega \to \{0,1\}$, a characteristic function. $\chi(x) = 1$ means there is material at $x \in \Omega$ and $\chi(x) = 0$ means there is none. The constraints $C$ may comprise the one or more boundary conditions and/or the global quantity constraint.

The material may be an isotropic linear elastic material composed of two phases A and B, with elastic tensor $\mathbb{A}$ and $\mathbb{B}$. The unition of the two phases may fill the domain $\Omega$. If $\chi$ is the characteristic function of phase A, then the elastic tensor of the whole material may be expressed as a linear combination of the two phases

$$\mathbb{A}_\chi = \chi\mathbb{A} + (1-\chi)\mathbb{B}.$$

In examples, one of the phases (e.g., B) may be considered "weak" and is supposed to model emptiness. The mechanical characteristics of the weak phase is set in accordance, for example, its Young's modulus, which may be set to a small value (e.g., $10^{-9}$).

The energy functional may comprise the compliance for the material composed of the two phases, i.e.,

$$\mathcal{J}(\chi) = \frac{1}{2}\int_\Omega \underline{\underline{\epsilon}}_\chi : \mathbb{A}_\chi : \underline{\underline{\epsilon}}_\chi$$

where $\underline{\underline{\varepsilon}}_\chi(x)$ is the strain at point $x \in \Omega$ and

$$\underline{\underline{\epsilon}}_\chi(x) = \frac{1}{2}\left(\underline{\underline{\nabla\xi}}_\chi(x) + \underline{\underline{\nabla\xi}}_\chi(x)^T\right)$$

with $\underline{\xi}_\chi(x)$ being the displacement at point $x \in \Omega$ under the effect of the one or more forces and the one or more boundary conditions. The constraints may in particular the global quantity constraint as $\int_\Omega \chi(x)dx \leq V_A$ for a given volume $V_A \leq |\Omega|$, $|\Omega|$ being the volume of the domain $\Omega$.

The characteristic function only takes values in {0,1} which makes the optimization problem discontinuous and difficult to converge to a solution, *e.g.*, when the optimization problem is solved by an iterative algorithm. Thus, the method may comprise Solid Isotropic Material with Penalization (SIMP) method to relax the sharp changes in characteristic function. The SIMP method replaces the characteristic function by density function $\rho: \Omega \to [0,1]$ to describe the material distribution across the domain as

$$\min_{\rho:\Omega\to[0,1]} \mathcal{J}(\rho) \quad (TO - SIMP)$$
$$s.t. \quad C(\rho) \le b$$

Such a density function may be referred to as the volume fraction on ach FE mesh as discussed before. The SIMP method may define an elastic tensor for intermediate densities (i.e., $\rho(x) \in ]0,1[$) by a polynomial interpolation of the Young's modulus with the two phases, with a degree $p > 0$:

$$E(\rho) = E_B + \rho^p (E_A - E_B)$$

where $E_A$ and $E_B$ are the Young's modulus of the phases A and B, respectively.

The degree $p$ is referred to as the penalization. In examples, the penalization may be chosen large enough (e.g., 3.0) such that the solution of the SIMP improves the smoothness properties for the optimization without significant change in the solution of (*TO - SIMP*) compared to (*TO*).

The SIMP method still does not provide control over the type of the optimized layout of material obtained by the method and the obtained layout usually is of very low complexity. Further, may often fail to explore efficiently the large space of topologies and likely stuck in local minima.

Examples of the system of reaction-diffusion equations are now discussed.

In particular, the system of reaction-diffusion equations comprises $d \, (\ge 2)$ equations for the variables vector

$$\phi: I \times \Omega \to \mathbb{R}^d$$ on the domain $\Omega$ of the form:

$$\partial_t \phi(t,x) = D\Delta\phi(t,x) + R(t,x,\phi) \quad \forall(t,x) \in I \times \Omega$$

where:

- $I \subset \mathbb{R}$ is a time interval;
-

$$D \in \mathcal{M}_{d,d}(\mathbb{R})$$

is a diagonal matrix representing the diffusion coefficients;
- $R$ is the reaction term;

and where $\phi(0,.) = \phi_0$ is the initial condition for the system of equations.

It is well-known that the solution of a system of ordinary differential equations in form of $\partial_t\phi(t, x) = R(t,x,\phi)$, i.e., the above system of reaction-diffusion equations without the diffusion term $D\Delta\phi(t,x)$ may converge to a stable homogenous steady state as $t \to \infty$. It is also known in the art, for example, Turing, A. M. (1990). "The chemical basis of morphogenesis". Bulletin of mathematical biology, 52(1-2), 153-197, that by adding the diffusion term and under some additional conditions on the function $R$ and the matrix $D$, said stable steady state turns into a linearly unstable equilibrium point and the solution of the system of reaction-diffusion equations converges towards an inhomogeneous state, creating complex patterns. These patterns are also called Turing patterns and are common and have been used in order to explain pattern apparition in nature, and more specifically for living beings (e.g. on animal skins). In examples, the method of topology optimization may use these patterns to obtain complex patterns for structures in 3D from a very succinct set of equations.

In particular examples, the system of reaction-diffusion may comprise two equations (and two state variables accordingly) and may be written under this dimensionless general form:

$$\begin{cases} \partial_t u = \Delta u + \sigma f(u, v) \\ \partial_t v = d\Delta v + \sigma g(u, v) \end{cases} \quad (\boldsymbol{RD_{general}})$$

with $d = \dfrac{D_v}{D_u}$ and the initial condition $(u(0,\cdot), v(0,\cdot)) = (u_0, v_0)$. General conditions on $d, \sigma, f, g$ for Turing pattern formation and diffusion-driven instabilities may be chosen according to the prior art, for example Murray, J. D. Mathematical biology II: spatial models and biomedical applications. Vol. 3. Springer-Verlag, 2001 and Pearson, John E. "Complex patterns in a simple system." Science 261, no. 5118 (1993): 189-192. In particular, $d$ may be chosen such that $d \neq 1$ (e.g., 0.5).

The system of reaction-diffusion equations may be a Gray-Scott Model. The Gray-Scott Model may be written as the following form:

$$\begin{cases} \partial_t u = D_u \Delta u - uv^2 + F(1 - u) \\ \partial_t v = D_v \Delta v + uv^2 - (F + k)v \end{cases} (\boldsymbol{G - S})$$

where $u$ and $v$ are scalar functions and $D_u, D_v, F, k$ are scalar coefficients. For particular choices of parameters $D_u, D_v, F$ and $k$, the solution of the Gray-Scott Model produces Turing patterns.

As mentioned above, using of a system of reaction-diffusion equations may provide complex patterns from a simple model. The complex patterns may be directly employed in correspondence to the material distribution representing a 3D structure, for example using the mapping function as discussed before. However, these structures do not necessarily provide admissible mechanical properties such as low compliance.

The system of reaction-diffusion equations may comprise one or more parameters. Each system of reaction-diffusion equation may be defined completely by setting the value for the one or more parameters. Thus, a candidate material distribution may be completely defined by the values of the one or more parameters. In analogy to the optimal control terminology, such parameters may be equivalently referred to as the "control parameters". These parameters may be equivalently referred to as "control functions" regarding the known terminology in field of optimal control as discussed below. Each of the one or more parameters may be a free variable of the topology optimization. In other words, the topology optimization may comprise finding an optimized value for each of the one or more parameters of the system of reaction-diffusion equations corresponding to the material distribution obtained by the topology optimization. The topology optimization may vary each of the free variable to optimize the objective function. Each of the parameters may belong to a restricted interval. The interval represents the admissible values of the corresponding parameter. The method may define each interval before performing the topology optimization. The method may set each interval based on some mathematical criteria or physical constraints, automatically or according to a value inputted by a user. The value of each parameter may be a single value or a set of values over the FE mesh. Each value may correspond to a single element of the FE mesh.

In examples, for each value of the one or more parameters, the system of reaction-diffusion equations may represent the evolution of the state variables from an initial state at an initial time (e.g., 0), to a final state at a final time (e.g., 1). The solution of the system of equations may be equal to the final state of the state variables. The initial state may be set as the initial condition discussed earlier. The final time may be set to a large value such that the state variables no longer have change in their instant values, i.e., reach the steady state of the system of reaction-diffusion equations.

The value of each of the one or more parameters may depend on time and/or space. In other words, each of the one or more parameters may be a function of time between the initial time and the final time and/or a function a position in the FE mesh.

Examples of performing the topology optimization are now discussed.

The method of topology optimization considers the one or more boundary conditions, the global quantity constraint, and the correspondence of candidate material distributions to a solution of a system of reaction-diffusion equations. The method of topology optimization may involve the correspondence to a solution of a system of reaction-diffusion equations according to known methods in the literature and in particular optimal control and PDE-constrained optimization.

The topology optimization may comprise a plurality of iterations until convergence. Each iteration may comprise setting a value for the initial state of the state variables at the initial time. The iteration may further comprise computing a value of the state variables and a value of costate variables over the 3D finite element mesh and over a plurality of time steps between an initial time and a final time. Hereinafter, the costate variables may be equivalently called the "dual variables". Moreover, due to the large number of design variables in the process, the topology optimization may perform computing the value of state variables and the value of costate variables with a gradient-based method. Therefore, the method may also compute the derivatives of the objective function with respect to each free variable. In other words, the topology optimization method may compute how to change each free variable to reduce the objective function. This may be performed using the well-known and classic "Adjoint Sensitivity Analysis". In particular, the free variable may be the one or more parameters in the system of reaction-diffusion equations.

As mentioned above, the topology optimization may comprise computing a value of costate variables. Each costate variable may correspond to one of the one or more boundary conditions and/or the global quantity constraints and/or the correspondence of the candidate to a solution of reaction-diffusion equations. The method may compute the value of costate variables to satisfy the one or more boundary conditions and/or the global quantity constraints and/or the correspondence of the candidate to a solution of reaction-diffusion equations. Computing of each costate variable may be performed in accordance with a corresponding adjoint equation. The corresponding adjoint equation may be obtained according to any known method in the literature. In particular, the method may obtain the adjoint equations using the Pontryagin's maximum principle.

Examples of the Pontryagin's maximum principle are now discussed in reference to a generic problem. The explicit application of the Pontryagin's maximum principle in the method of topology optimization is discussed later.

For a final time > 0 , a time interval $I = [0, T]$, a set of control functions $\mathcal{U}$ defined on $I$ with values in the set of admissible controls $U_{ad} \subset \mathbb{R}^m$, and for

$$u \in \mathcal{U},$$

a problem of an ordinary differential equation (ODE) type may be considered on $\Omega$:

$$\mathcal{P}(u): \begin{cases} x'(t) = f\big(t, x(t), u(t)\big) & \forall t \in I \\ \qquad\qquad x(0) = x_0 \end{cases}.$$

Considering that, according to Cauchy-Lipschitz theorem, for every $\in \mathcal{U}$ , the problem $\mathcal{P}(u)$ admits a unique solution $x_u \in C^1(I, \mathbb{R}^n)$ which is the state of system according to the problem $\mathcal{P}(u)$ with initial condition $x_0 \in \mathbb{R}^n$ and where $f: I \times \mathbb{R}^n \times \mathbb{R}^m \longrightarrow \mathbb{R}^n$ defines the time evolution of the states.

Then, a typical optimal control problem may be formulated as follow:

$$\min_{u \in \mathcal{U}} \mathcal{J}\big(x_u(T)\big) \\ s.t. \ x_u \ sol. of \ \mathcal{P}(u) \quad (OCP) \\ x_u(T) \in M_1$$

with the cost function $\mathcal{J}: \mathbb{R}^n \longrightarrow \mathbb{R}$ and $M_1$ is the set of admissible final states of the abovementioned system. The cost to minimize may depend on the final state of the system; however, a more general cost may also be considered.

In this example each candidate is equal to a solution of $\mathcal{P}(u)$ for a parameter $u$.

In order to solve (OCP) a Hamiltonian H may be defined as:

$$H: I \times \mathbb{R}^n \times \mathbb{R}^n \times \mathbb{R}^m \quad \longrightarrow \quad \mathbb{R} \\ (t, x, p, u) \quad \longmapsto \quad p \cdot f(t, x, u)$$

where for an optimal $u$ in (OCP) the following conditions (1)-(3), according to the Pontryagin's maximum principle, hold:

(1) There exists an application $p: I \longrightarrow \mathbb{R}^n$

$$\begin{cases} x_u'(t) = \nabla_p H\big(t, x_u(t), p(t), u(t)\big) = f\big(t, x_u(t), u(t)\big) \\ \qquad\qquad p'(t) = -\nabla_x H\big(t, x_u(t), p(t), u(t)\big) \end{cases} \qquad \forall t \in I$$

Where $x_u$ is still the solution of $\mathcal{P}$ $(u)$.

(2)

$$H\big(t, x_u(t), p(t), u(t)\big) = \max_{v \in U_{ad}} \ H\big(t, x_u(t), p(t), v\big) \qquad a.e. \ \forall t \in I$$

(3)

$$p(T) + \nabla J\big(x_u(T)\big) \perp T_{x_u(T)} M_1$$

where $T_{x_u(T)} M_1$ is the tangent space to $M_1$ at the point $x_u(T)$.

The method of topology optimization may comprise computation of one or more sensitivities of the objective function, based on the finite element mesh, and the data associated to the finite element mesh using the SIMP method. The algorithm may further comprise computing the updated value of the state variables and the costate variables over the plurality of time steps. The method of topology optimization may comprise discretizing the system of reaction-diffusion equations in the time variable domain according to any known method in the field of numerical solution, for example, the forward Euler method, the backward Euler method or other advanced implicit-explicit schemes.

The convergence may be achieved when at least one of the following is satisfied:

- the number of iterations reaches a predetermined maximum number of iterations (e.g., 1000, or 10000);
- the absolute difference between the obtained value of the objective function at two consequent iterations is less than a predetermined value (e.g., $10^{-3}$ or $10^{-6}$);
- the ratio of the absolute difference between the obtained value of the objective function at two consecutive iterations to the absolute value of one of the two iterations is less than a predetermined value (e.g., $10^{-2}$ or $10^{-3}$);
- the absolute difference between the value of the final state of at least one of the state variables at two consecutive iterations is less than a predetermined value; or
- the ratio of the absolute difference between the value of the final state of at least one of the state variables at two consecutive iterations to the absolute value of the corresponding state variable at one of the two iterations is less than a predetermined value.

At the first iteration, the method may set the value of the initial state for the state variables to a predetermined value. The predetermined value may be chosen such that the corresponding value after the application of the mapping function on the initial state stays in the said interval, e.g., [0,1]. In particular, all the state variables may be set to a constant value over the FE mesh. At other iterations than first iterations, the value of the initial state for each state variable may be set to the value of the final state of the corresponding state variables of the preceding iteration. Such an initialization forms an improved method by adding the capability to perform each iteration on a relatively small time interval (i.e., the difference between the initial and final time of each iteration) and reaching a larger final time by increasing the number of iterations. Large final time is helpful in obtaining the Turing pattern in the solution of the reaction-diffusion equations.

Once convergence is achieved, the topology optimization may present a finalized design in the design space where each element has an optimized relative density value. Through a simple thresholding process, the general topology optimization workflow may extract the geometry defined by the collection of elements whose relative density value is above a certain threshold (e.g. chosen to be 0.5).

In particularly efficient examples of the method discussed herein, the system of reaction-diffusion equations may be a Gray-Scott Model as presented above. In particular, the Gray-Scott Model may have a reaction term, and at least one parameter of the reaction term in the Gray-Scott Model may be a free variable of the topology optimization. The chosen parameter may be the parameter $k$ in the (G-S) system discussed above. The initial condition of the Gray-Scott Model may be set to some predetermined value; thus the solution at a given time may be completely defined by the value of the parameter in the reaction term. The other coefficients of the Gray-Scott Model, i.e., $D_u$, $D_v$, and $F$ may

be chosen according to the known literature to provide the Turing patterns at least for one possible value of the parameter $k$.

Implementations of the methods are now discussed.

These implementations are focused on finding the material distribution across a bounded cuboid domain $\Omega \subset \mathbb{R}^3$ $\Omega$ to minimizes the total compliance of the 3D modeled object formed according to the material distribution. The material is isotropic with the Young's modulus $E_0$ and the Poisson's ratio v. The object undergoes a given set of forces $\mathcal{F} = \{f: \Omega \to \mathbb{R}^3\}$ while satisfying some kinematic constraints $\mathcal{C} = \{\Sigma \subset \partial\Omega \,|\, \xi_{|\Sigma} = 0\}.$ The final Time T is set to a predefined value; thus the time interval is $I = [0,T]$. Further, an initial material distribution $\rho_0: \Omega \to [0,1]$ is set over $\Omega$.

The system of reaction diffusion is set to be a Gray-Scott Model with a free parameter $\theta$ in the reaction term. This leads to the following system of reaction-diffusion equations:

$$P_\theta: \begin{cases} \partial_t u = D_u \Delta u - uv^2 + F(1-u) \\ \partial_t v = D_v \Delta v + uv^2 - (F+\theta)v \\ \big(u(0,\cdot), v(0,\cdot)\big) = (u_0, v_0) \end{cases}$$

where

$$\mathcal{U} = \{\theta: I \times \Omega \longrightarrow [\theta_m, \theta_M]\}$$

is the set of admissible control functions. Further, the boundary conditions are set to be consistent with the initial conditions. In examples, the boundary conditions may be set in form of Neuman conditions, as

$$\nabla u \cdot n_\Omega = 0 \text{ on } \partial\Omega,$$

$$\nabla v \cdot n_\Omega = 0 \text{ on } \partial\Omega,$$

where $\partial\Omega$ designates the boundary of the domain $\Omega$ and $n_\Omega$ is the outward unit normal vector on the boundary of $\Omega$.

In other examples, the boundary conditions may be set in form of Dirichlet conditions, as

$$u(t,x) = 0 \text{ for } x \in \partial\Omega,$$

$$v(t,x) = 0 \text{ for } x \in \partial\Omega.$$

For every fixed

$$\theta \in \mathcal{U}$$

and for any $t \in [0,T]$, the solution of $P_\theta$ is denoted by $(u_\theta, v_\theta)$.

The set of admissible control parameter $[\theta_m, \theta_M]$, the diffusion coefficient $D_u$ and $D_v$, and the coefficient F is set such that the set of parameters always allows the formation of Turing patterns as known in the art. The coefficient $F$ is set to 0.035 and $[\theta_m, \theta_M] = [0.0615; 0.076]$. The ratio $d = \dfrac{D_v}{D_u}$ is set to 0.5 at the discrete level, thus the explicit values for $D_u$ and $D_v$ are set in relation to the space and time discretization parameters below. Further, the initial conditions $(u_0, v_0)$ is set to (0.5, 0.5) / $\beta$ for a real number $\beta > 0$. The coefficient $\beta$ may be set to 3.0 in the implementations. The coefficient may however vary around this illustrative value, for example between 0.1 and 15, between 0.5 and 10, or in particular between 2.5 and 3.5.

Then the following optimization problem for obtaining the minimum compliance is solved:

$$(\mathbf{OC}) \qquad \min_{\theta \in \mathcal{U}} \mathcal{J}(\rho_{\theta,T}) \text{ such that } \begin{cases} \int_{\Omega} \rho_{\theta,T} dV \le V_0 \\ \rho_{\theta,T} = \gamma \circ (u_\theta, v_\theta)(T,\cdot) \end{cases}.$$

where:

$$\mathcal{J}(\rho_{\theta,T}) = \frac{1}{2} \int_{\Omega} \underline{\epsilon}_{\rho_{\theta,T}} : \mathbb{A}_{\rho_{\theta,T}} : \underline{\epsilon}_{\rho_{\theta,T}}.$$

The $\rho_{\theta,T} : I \times \Omega \to [0,1]$ designates the material distribution at the final time T parametrized with the parameter $\theta$. The double-dot product notation in $B$: $\mathbb{A}$ :$C$ when B and C are tensors of second order (like strain tensor $\underline{\epsilon}_{\rho_{\theta,T}}$) and $\mathbb{A}$ is a tensor of forth order (like elastic tensor $\mathbb{A}_{\rho_{\theta,T}}$) is well-defined in the field of mechanics and elasticity. The elastic tensor $\mathbb{A}_{\rho_{\theta,T}}$ is defined as in the SIMP method according to the interpolation of the Young's modulus:

$$E(\rho_{\theta,T}) = E_B + (\rho_{\theta,T})^p (E_A - E_B)$$

where p = 3. In the most common cases $E_A = E_0$. Further $E_B = E_{min}$ is the aritificial Young's modulus $E_{min}$ assigned to void regions which is set to $E_{min} = 10^{-9}$. The elastic tensor is then calculated based on $E(\rho_{\theta,T})$ and the Poisson's ratio $v$ as known in the field of mechanics.

The strain tensor $\underline{\epsilon}_\rho$ is then derived equation of mechanic equilibrium for continuous materials:

$$-div\left(\mathbb{A}\underline{\epsilon}\right) = f,$$

and according to the boundary condition. $f$ is representative of one load case, possibly comprising several forces applied at the same time. This equation may be solved for each load case.

The mapping function in (OC) is defined as $\gamma(u,v) = \beta u$ for the $\beta$ introduced above. Further, the upper bound for the total amount of material is set as the data associated to the 3D finite element mesh to $V_0$:

$$\int_{\Omega} \rho_{\theta,T} \, dV \le V_0,$$

and the material distribution at the final time $\rho_T$ is chosen among the candidates which correspond to the solution of the Gray-Scott model imposed by the free parameter $\theta$.

The problem is then discretized in space. The dimensions $\Omega$ are considered to be representable as the Cartesian product of 3 intervals $K_1, K_2, K_3 \subset \mathbb{R}$:

$$\Omega = K_1 \times K_2 \times K_3$$

where $K_i = (0, M_i h)$ with $M_i \in \mathbb{N} \; \forall i \in \{1,2,3\}$ and a certain discretization size $h > 0$. Then the domain $\Omega$ can be represented as $\Omega = \{x = (x_1, x_2, x_3) \in \mathbb{R}^3 \mid 0 < x_i < M_i h \; \forall i \in \{1,2,3\}\}$. The implementations replace any generic function $f : \Omega \to \mathbb{R}$ defined on $\Omega$ by a discretized function in a discretized space $\hat{E} = \mathbb{R}^{M_1 \times M_2 \times M_3}$, i.e., by numbers $f_{ijk} = f(ih, jh, kh)$ defined on the discretized domain $\Omega_{ind} =$

$$\prod_{d=1}^{3} [\![1, M_d]\!].$$

The discretized domain may also be considered as a FE mesh.

Further, the discrete gradient operator on $\hat{E}$ is defined as:

$$[\mathbf{D}f]_{ijk} = \frac{1}{h} \begin{pmatrix} f_{i+1,j,k} - f_{ijk} \\ f_{i,j+1,k} - f_{ijk} \\ f_{i,j,k+1} - f_{ijk} \end{pmatrix}$$

and the discrete Laplacian operator is defined as

$$[\mathbf{L}f]_\tau = \frac{1}{h^2} \sum_{\tau' \in \Omega_{ind}} W_{\tau,\tau'} f_{\tau'} \qquad \forall \tau \in \Omega_{ind}$$

where $W_{\tau,\tau'} = K(\tau - \tau')$ is the convolution kernel satisfying:

$$-W_{\tau,\tau} = \sum_{\tau' \neq \tau} W_{\tau,\tau'}.$$

As a particular choice $w_{\tau,\tau'} = c(|i\text{-}i'|) \cdot c(|j\text{-}j'|) \cdot c(|k\text{-}k|)$ where $\tau = (i, j, k)$, $\tau' = (i', j', k')$ and:

$$c: \mathbb{N} \longrightarrow \mathbb{R}$$

$$\forall m \in \mathbb{N}, \quad c(m) = \begin{cases} -1 & \text{if } m = 0 \\ 0.13 & \text{if } m = 1. \\ 0 & \text{else} \end{cases}$$

Using the discrete Laplacian operator defined above, the system of reaction-diffusion equations $P_\theta$ may be transformed into a system of ODEs with respect to the time variable as:

$$\begin{cases} u'(t) = D_u L u(t) - u(t)v(t)^2 + F\big(1 - u(t)\big) \\ v'(t) = D_v L v(t) + u(t)v(t)^2 + \big(F + \theta(t)\big)v(t) \quad \forall t \in I \qquad (\hat{P}_\theta) \\ u(0) = u_0, \quad v(0) = v_0 \end{cases}$$

where u, v are smooth functions in time and discretized in space, i.e., u, v $\in C^1(I, \hat{E})$. Further, for the parameter θ it holds θ $\in L^\infty(I, [\theta_m, \theta_M]^{M1 \times M2 \times M3})$. Here, u(*t*)v(*t*)

denotes the element-wise product between u(*t*) and v(*t*) in the discretized space $\hat{E}$. Similarly, v(*t*)$^2$ = v(*t*)v(*t*).

The system of ODEs $\hat{P}_\theta$ is according to examples of optimal control discussed above. In order to employ the Pontryagin's maximum principle, a Hamiltonian of the system

$$\hat{P}_\theta, H: \hat{E}^4 \times \mathcal{U} \longrightarrow \mathbb{R}$$

is defined as:

$$H(u, v, p, q, \theta) = \langle p, R_u(u, v, \theta) \rangle_{\hat{E}} + \langle q, R_v(u, v, \theta) \rangle_{\hat{E}}$$

with

$$R_u(u, v, \theta) = D_u \mathbf{L} u - uv^2 + F(1 - u)$$

$$R_v(u, v, \theta) = D_v \mathbf{L} v + uv^2 - (F + \theta)v$$

in which p and q are the costate variables.

As $R_u(u,v)$ does not depend on the parameter $\theta$, $R_v(u,v,\theta) = \tilde{R}_v(u,v) - \theta v$ which allows splitting the Hamiltonian as:

$$H(u, v, p, q, \theta) = \tilde{H}(u, v, p, q) - \langle q, \theta v \rangle.$$

Considering $(u^*,v^*)$, $\theta^*$ to denote respectively the optimal state of $(u,v)$ and the optimal control parameter, the following property has to be satisfied:

$$H\big(u^*(t), v^*(t), p(t), q(t), \theta^*(t)\big)$$

$$= \max_{\varphi \in \mathcal{U}} \ H(u^*(t), v^*(t), p(t), q(t), \varphi) \ a.e. \forall t \in I$$

$$= \tilde{H}(u^*(t), v^*(t), p(t), q(t)) - \min_{\varphi \in \mathcal{U}} \ \langle q(t), \varphi v^*(t) \rangle$$

which means that an optimal control can only take extreme values at each time $t \in I$:

$$a.e. \forall t \in I, \quad \theta^*(t) \in \{\theta_{min}, \theta_{max}\}.$$

Thus, at each time, the optimal control parameter $\theta^*(t)$ is either equal to $\theta_{min}$ or $\theta_{max}$, depending on the values of $q(t)$ and $v(t)$. Given a choice of the parameters as discussed above according to the prior art, v and u remains always positive (i.e., larger than zero) if $u_0$ and $v_0$ are positive, thus the value $\theta^*(t)$ depends on the sign of q(t), at least at each point of the discretized space $\hat{E}$.

$$\theta_{ijk}^*(t) = \mathbf{1}_{\{q_{ijk}(t) \geq 0\}} \theta_{min} + \mathbf{1}_{\{q_{ijk}(t) < 0\}} \theta_{max} \qquad (*)$$

The Pontryagin's maximum principle gives the following adjoint equations:

$$\frac{dp}{dt}(t) = -\nabla_u H\big(u(t), v(t), p(t), q(t), \theta(t)\big)$$

$$\frac{dq}{dt}(t) = -\nabla_v H\big(u(t), v(t), p(t), q(t), \theta(t)\big)$$

which leads to:

$$\frac{dp}{dt}(t) = -a_u \mathbf{L}^\dagger p(t) + (v(t)^2 - F)p(t) - v(t)^2 q(t)$$

$$\frac{dq}{dt}(t) = -a_v \mathbf{L}^\dagger q(t) + \big(\theta(t) + F - 2u(t)v(t)\big) q(t) + 2u(t)v(t)p(t)$$

where the operator $\mathbf{L}^\dagger$ is the adjoint of $\mathbf{L}$. The last equation may be written in a more compact form:

$$\dot{P}(t) = \mathbf{A}\big(U(t), \theta(t)\big)P(t) \quad \forall t \in I$$

where $P(t) = (p(t), q(t))^T$ is the vector of costate variables, $U(t) = (u(t), v(t))$ is the vector of state variables, with $\mathbf{A}$ a matrix that depends on both the state of the system and the value of the control parameter.

The Pontryagin's maximum principle also gives that at time $T$, if the set $M_1$ of admissible final states is defined by $M_1 = \{U \in \hat{E} \times \hat{E} \mid \Gamma(u,v) \leq 0\}$, with $\Gamma{:}U = (u,v) \mapsto h^3 \sum_i \gamma(u_i, v_i) - V_0$ as the global quantity constraint, the costate has to satisfy:

$$\exists \lambda > 0: \qquad P(T) = -\nabla C_T\big(U(T)\big) + \lambda \mathbf{1}_{\{\Gamma(U(T)) \geq 0\}} \nabla \Gamma\big(U(T)\big)$$

where $C(U) = \mathcal{J}\big(\gamma(u, v)\big)$. If $\gamma(u, v) = \beta u$, then:

$$\begin{cases} p(T) = -\beta \cdot \nabla \mathcal{J}\big(\beta u(T)\big) + \lambda \mathbf{1}_{\{\Gamma(U(T)) \geq 0\}} h^3 \beta \underline{\mathbf{1}} \\ q(T) = 0 \end{cases} \qquad (**)$$

where $\underline{\mathbf{1}} \in \hat{E}$ is the vector $(1, \cdots, 1)^T$.

Here $\lambda$ is the Lagrange variable (or Lagrange multiplier) used to impose global quantity constraint. the $\nabla \mathcal{J}$ may be computed by computation of the sensitivities for example by adjoint methods as known in the art.

Then, P satisfies:

$$P(t) = \exp\left(-\int_t^T \mathbf{A}\big(U(s), \theta(s)\big) ds\right) P(T).$$

In this expression, $\theta(s)$ still depends on the value of $P(s)$, and $U(s)$ depends on the values of $\theta(v)$ and thus $P(v)$ for all $0 \leq v \leq s$. Instead of trying to solve the continuous time problem, the implementations perform the time discretization by setting $(t_0, t_1, \cdots, t_N) \in I^{N+1}$ such that:

$$0 = t_0 < t_1 < \cdots < t_N = T.$$

The time variable is used as a dummy variable and other time intervals can be translated such that it starts from $t_0 = 0$. In particular, the implementations set $t_i = i\delta t \ \forall i \in [\![ 0, N ]\!]$, with $\delta t = \dfrac{T}{N}$ and comprise the discretized version of the time-dependent functions, given by the families $(u^n)_n \in \hat{E}^{N+1}$ ($u^n$ "stands for $u(t_n)$").

In particular, the diffusion parameters are set as $D_u = \dfrac{h^2}{8\delta t}$ and $D_v = \dfrac{h^2}{16\delta t}$. Such settings ensure the appearance of Turing's pattern in the solution of the system of equations by enforcing that the ratio of $D_v$ and $D_u$ is not unity under the discretization.

The time-related derivative may be defined as:

$$[\mathbf{D}_t u]^n = \frac{1}{\delta t}(u^{n+1} - u^n)$$

using forward Euler scheme.

Thus, the evolution of the state variables:

$$\begin{cases} u^{n+1} = u^n + \delta t[a_u \mathbf{L} u^n - u^n (v^n)^2 + F(1 - u^n)] \\ v^{n+1} = v^n + \delta t[a_v \mathbf{L} v^n + u^n (v^n)^2 - (F + \theta^n) v^n] \end{cases} \qquad (DRD)$$

While the costate equations write:

$$\begin{cases} \mathrm{p}^{n-1} = \mathrm{p}^n + \delta t[a_u \mathbf{L}^\dagger \mathrm{p}^n - ((v^n)^2 - F)\mathrm{p}^n + (v^n)^2 \mathrm{q}^n] \\ \mathrm{q}^{n-1} = \mathrm{q}^n + \delta t[a_v \mathbf{L}^\dagger \mathrm{q}^n + (2u^n v^n - F - \theta^n)\mathrm{q}^n - 2u^n v^n \mathrm{p}^n] \end{cases} \quad (DCE)$$

In (DRD) the $(\mathrm{p}^n, \mathrm{q}^n)_n$ is required to compute the $(u^n, v^n)_n$ and in (DCE) the $(\mathrm{p}^n, \mathrm{q}^n)_n$ are obtained from the $(u^n, v^n)_n$. In order to solve this mutual dependency, the final time $T$, thereby the time interval $[0, T]$, is chosen to be rather small, thus u and v do not vary very much across $I$ and $(u^n, v^n)_n$ is replaced by $(u^0, v^0)$ in (DCE). This version of (DCE) may be written in compact form as:

$$\mathrm{P}^{n-1} = \left(\mathbf{I} - \delta t \mathbf{A}(\mathrm{U}^0, \theta^n)\right)\mathrm{P}^n$$

where $\theta^n$ is known from $\theta^n = f(\mathrm{P}^n)$ with $f$ given by equation (*).

Further, because of the assumption of small changes, $\nabla C(U(T))$ is approximated by $\nabla C(U^0)$.

The implementations repeat the computations on several small-time intervals of the form $[0, T]$, where the final values obtained for one of those intervals are used as initialization for the next one.

In summary, the Algorithm of the implementations may be summarized as below:

1. Setting 3D FE mesh

   a. $\Omega$ : cuboid spatial domain
   b. $(K_i)_{1 \leq i \leq 3}$ : Space discretization integers

2. Setting data associated to the FE mesh

   a. $\mathcal{F}$ , set of forces to be applied to the structure

   b. $\mathcal{C}$ , set of boundary conditions
   c. $E_0$, base Young's modulus and Poisson's ratio v

3. Setting time discretization parameter and the initial value of the system of reaction-diffusion

   a. $T$ : size of the time interval
   b. $N$ : times discretization integer

4. Setting the Lagrange multipliers parameters

   a. Setting $\lambda > 0$ as the initial "Lagrange" variable
   b. Setting $\eta > 0$ as the Lagrange variable increase rate.

5. Compute

$$\nabla \mathcal{J}\left(\gamma(\mathrm{U}^0)\right)$$

with the SIMP method, from ($\mathcal{F}$ , $\mathcal{C}$ ) and $E_0$

6. Deduce $\mathrm{P}^N$ from (**)

7. For $n = N$ to 1:

   a. $\theta^n \leftarrow f(P^n)$ (from (*))
   b. $\mathrm{P}^{n-1} = (\mathbf{I} - \mathbf{A}(\mathrm{U}^0, \theta^n))\mathrm{P}^n$

8. For $n = 0$ to $N - 1$:

a. Compute $U^{n+1}$ from $U^n$ via (*DRD*)

b. $\lambda \leftarrow (1 + \eta \mathbf{1}_{\{\Gamma(U^N)\geq 0\}})\lambda$

9. Set $U^0 \leftarrow U^N$ and repeat the steps 5 to 9 till convergence achieved according to a convergence criterion.

The Lagrange variable increase rate $\eta$ may be set between 0.05 and 1, or in particular between 0.05 and 0.2. Larger $\eta$ leads to faster convergence while smaller $\eta$ improves exploring the optimization space.

Now some results obtained by the discussed implementations of the method of topology optimization are presented in reference to FIG.s 3 - 6.

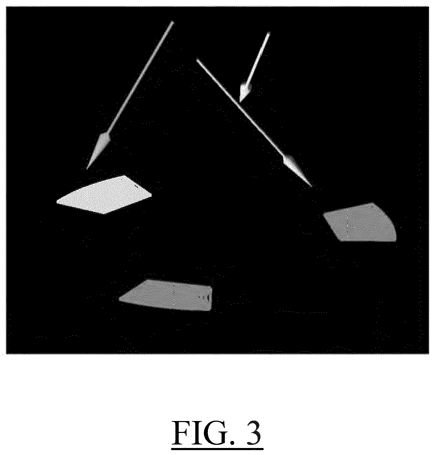

FIG. 3 presents the provided forces (represented by arrows) and boundary conditions (represented by plates) for designing a turning tripod by the method.

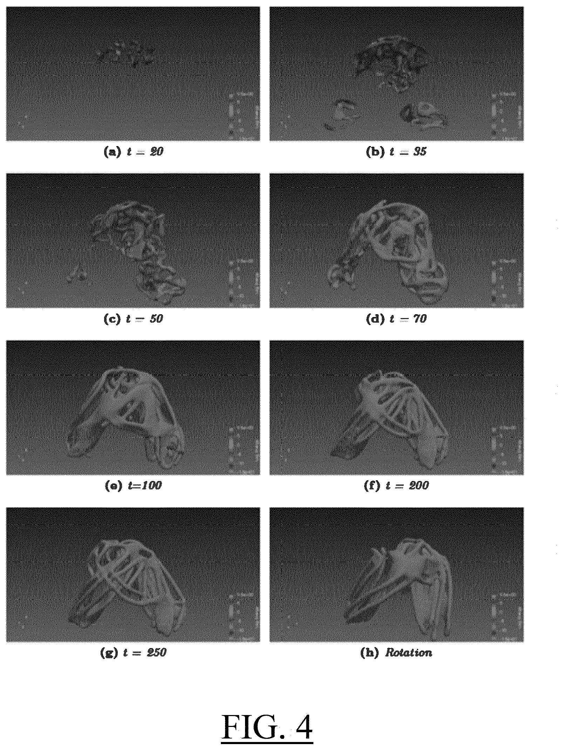

FIG. 4(a) - (g) presents the time evolution of the 3D modeled object obtained according to the method based on the forces and boundary conditions presented in FIG. 3 from t=20s to t=250s. FIG. 4(h) presents a different view of the obtained 3D modeled object of FIG. 4(g).

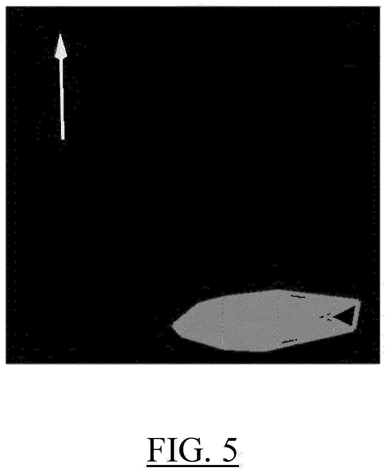

FIG. 5 presents the provided forces (represented by arrows) and boundary conditions (represented by plates) for designing a scooter part by the method.

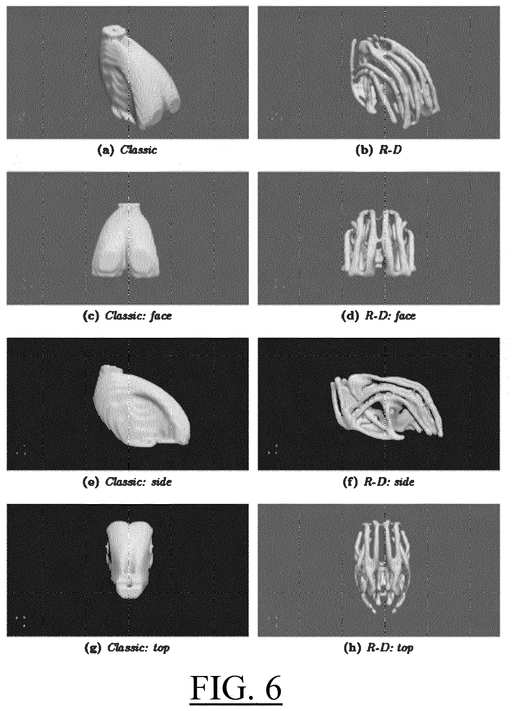

FIG. 6 presents comparison of the 3D modeled object obtained according to the prior art (left) and the method according to the implementations (right) on the forces and boundary conditions presented in FIG. 5 from different views. as shown, the implementations of the method are capable to provide the general shape of the structure as the method of the prior art but with finer and more porous local patterns.

**Claims**

1. A computer-implemented method for designing a 3D modeled object representing a mechanical part formed in a material, the method comprising:

   - providing:

     ○ a 3D finite element mesh ($\Omega_{ind}$), and
     ○ data associated to the 3D finite element mesh and comprising:

       ▪ one or more forces ($\mathcal{F}$) each forming a respective load case, and
       ▪ one or more boundary conditions ($\mathcal{C}$);
       ▪ one or more parameters ($E$) related to the material;
       ▪ a global quantity constraint ($\int_\Omega \rho_{\theta,T} dV \leq V_0$) relative to a global quantity ($V_0$) of the material in the finite element mesh; and

   - performing a topology optimization

$$\left( \begin{array}{l} \min_{\theta \in \mathcal{U}_{ad}} \mathcal{J}(\rho_{\theta,T}) \\ s.t. \begin{cases} \int_\Omega \rho_{\theta,T} dV \leq V_0 \\ \rho_{\theta,T} = \gamma \circ (u_\theta, v_\theta)(T,\cdot) \\ (u_\theta, v_\theta) \text{ sol.of } P_\theta \end{cases} \end{array} \right)$$

   based on the finite element mesh and on the data associated to the finite element mesh, the topology optimization being performed among candidate ($\rho$) material distributions, each candidate material distribution corresponding to a solution of a system

$$\left( \begin{cases} \partial_t u = \Delta u + \sigma f(u,v) \\ \partial_t v = d\Delta v + \sigma g(u,v) \\ \big(u(0,\cdot), v(0,\cdot)\big) = (u_0, v_0) \end{cases} , P_\theta : \begin{cases} \partial_t u = D_u \Delta u - uv^2 + F(1-u) \\ \partial_t v = D_v \Delta v + uv^2 - (F+\theta)v \\ \big(u(0,\cdot), v(0,\cdot)\big) = (u_0, v_0) \end{cases} \right)$$

of reaction-diffusion equations.

2. The method of claim 1, wherein each candidate material distribution is equal to the application of a mapping function ($\gamma$) to the solution of the system of reaction-diffusion equations.

3. The method of claim 2, wherein the mapping function is a shape-preserving function mapping the solution of the system of reaction-diffusion equations to an interval ($[0,1]$) of material densities, the candidate material distributions thereby taking values in said interval.

4. The method of claim 3, wherein the system of reaction-diffusion equations has state variables ($u,v$), and the shape-preserving function is a monotonous function of at least one state variable.

5. The method of claim 4, wherein the shape-preserving function is a linear function ($\gamma(u,v) = \beta u$) of one ($u$) of the state variables.

6. The method of any one of claims 1 to 5, wherein the system of reaction-diffusion equations comprises one or more parameters ($\theta$) which are each a free variable of the topology optimization, each parameter belonging to a restricted interval ($U_{ad}$).

7. The method of claim 6, wherein, for each value ($\theta \in [\theta_m, \theta_M]$) of the one or more parameters, the system of reaction-diffusion equations represents the evolution of the state variables ($u,v$), from an initial state ($u^0,v^0$) at an initial time (0), to a final state ($u^T,v^T$) at a final time (T), the solution of the system of equations being equal to the final state of the state variables.

8. The method of claim 6 or 7, wherein the value of each of the one or more parameters ($\theta$) depends on time and/or space.

9. The method of any one of claims 1 to 8, wherein the system of reaction-diffusion equations has state variables, and the topology optimization comprises a plurality of iterations until convergence, each iteration comprising:

- setting a value for the initial state of the state variables at the initial time ($u^0,v^0$); and
- computing a value of the state variables ($u$, $v$) and a value of costate variables over the 3D finite element mesh and over a plurality of time steps ($t_i$) between an initial time (0) and a final time (T).

10. The method of claim 9, wherein

- at the first iteration, the value of the initial state for each state variable is set to a predetermined value; and
- at other iterations than first iteration, the value of the initial state for each variable is set to the value of the final state of the corresponding state variable of the preceding iteration.

11. The method of claims 1 to 10, wherein the system of reaction-diffusion equations is a Gray-Scott Model

$$\left( \begin{cases} \partial_t u = D_u \Delta u - uv^2 + F(1-u) \\ \partial_t v = D_v \Delta v + uv^2 - (F+\theta)v \\ (u(0,\cdot), v(0,\cdot)) = (u_0, v_0) \end{cases} \right).$$

12. The method of claim 11, wherein the Gray-Scott Model has a reaction term ($F + \theta$), and at least one parameter of the reaction term ($\theta$) in the Gray-Scott Model is a free variable of the topology optimization.

13. A computer program comprising instructions for performing the method according to any one of claims 1 to 12.

14. A computer readable storage medium having recorded thereon the computer program of claim 13.

15. A system comprising a processor coupled to a memory and a graphical user interface, the memory having recorded thereon the computer program of claim 13.

FIG. 1

1000

1010

CPU

1070

RAM

1020

Mass storage
devices controler

Display

1080

B
U
S

1030

Hard
drive

CDROM

Haptic
device

1090

1040

Network Adapter

Video
RAM

1050

1100

Network

GPU

1060

1110

## FIG. 2

FIG. 3

(a) $t = 20$

(b) $t = 35$

(c) $t = 50$

(d) $t = 70$

(e) $t=100$

(f) $t = 200$

(g) $t = 250$

(h) *Rotation*

# FIG. 4

FIG. 5

(a) *Classic*

(b) *R-D*

(c) *Classic: face*

(d) *R-D: face*

(e) *Classic: side*

(f) *R-D: side*

(g) *Classic: top*

(h) *R-D: top*

# FIG. 6

Europäisches
Patentamt

European
Patent Office

Office européen
des brevets

## EUROPEAN SEARCH REPORT

Application Number

EP 20 30 6655

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLE SIGMUND ET AL: "Topology optimization approaches : A comparative review", STRUCTURAL AND MULTIDISCIPLINARY OPTIMIZATION, vol. 48, no. 6, 21 August 2013 (2013-08-21), pages 1031-1055, XP055485828, Berlin/Heidelberg ISSN: 1615-147X, DOI: 10.1007/s00158-013-0978-6 * page 1040 - page 1050 * | 1-15 | INV. G06F30/20 G06F30/23 |
| X | JAE SEOK CHOI ET AL: "Topology optimization using a reactiondiffusion equation", COMPUTER METHODS IN APPLIED MECHANICS AND ENGINEERING, NORTH-HOLLAND, AMSTERDAM, NL, vol. 200, no. 29, 13 April 2011 (2011-04-13), pages 2407-2420, XP028221624, ISSN: 0045-7825, DOI: 10.1016/J.CMA.2011.04.013 [retrieved on 2011-04-20] * the whole document * | 1-15 | |
| X | EMMENDOERFER HÉLIO ET AL: "Topology optimization with local stress constraint based on level set evolution via reaction-diffusion", COMPUTER METHODS IN APPLIED MECHANICS AND ENGINEERING, NORTH-HOLLAND, AMSTERDAM, NL, vol. 305, 2 March 2016 (2016-03-02), pages 62-88, XP029528034, ISSN: 0045-7825, DOI: 10.1016/J.CMA.2016.02.024 * the whole document * | 1-15 | TECHNICAL FIELDS SEARCHED (IPC)  G06F |

-/--

The present search report has been drawn up for all claims

| Place of search | Date of completion of the search | Examiner |
|---|---|---|
| Munich | 2 June 2021 | Fernandez, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 20 30 6655

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 674 932 A1 (DASSAULT SYSTEMES [FR]) 1 July 2020 (2020-07-01)<br>* claims 1-12; figures 1-13 *<br>* column 7, paragraph [0027] - column 10, paragraph [0036] *<br>----- | 1-15 | |
| Y | US 2020/266453 A1 (DEDE ERCAN MEHMET [US] ET AL) 20 August 2020 (2020-08-20)<br>* page 2, paragraph [0034]; figures 1-4 *<br>* page 3, paragraph [0042] - page 4 *<br>* page 5, paragraph [0051] *<br>----- | 1-15 | |
| A | EP 2 600 315 A1 (DASSAULT SYSTEMES [FR]) 5 June 2013 (2013-06-05)<br>* claims 1-14; figures 1-14 *<br>----- | 1-15 | |
| | | | **TECHNICAL FIELDS SEARCHED** (IPC) |

The present search report has been drawn up for all claims

| Place of search | Date of completion of the search | Examiner |
|---|---|---|
| Munich | 2 June 2021 | Fernandez, Eva |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 30 6655

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2021

| Patent document cited in search report | | Publication date | Patent family member(s) | | Publication date |
|---|---|---|---|---|---|
| EP 3674932 | A1 | 01-07-2020 | CN | 111383327 A | 07-07-2020 |
| | | | EP | 3674932 A1 | 01-07-2020 |
| | | | JP | 2020115340 A | 30-07-2020 |
| | | | US | 2020210632 A1 | 02-07-2020 |
| US 2020266453 | A1 | 20-08-2020 | NONE | | |
| EP 2600315 | A1 | 05-06-2013 | CA | 2797162 A1 | 29-05-2013 |
| | | | CN | 103136790 A | 05-06-2013 |
| | | | EP | 2600315 A1 | 05-06-2013 |
| | | | JP | 6196032 B2 | 13-09-2017 |
| | | | JP | 2013114694 A | 10-06-2013 |
| | | | KR | 20130060162 A | 07-06-2013 |
| | | | US | 2013135302 A1 | 30-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREASSEN, ERIK et al.** Efficient topology optimization in MATLAB using 88 lines of code. *Structural and Multidisciplinary Optimization,* 2011, vol. 43.1, 1-16
- **ALLAIRE, GRÉGOIRE.** Shape optimization by the homogenization method. Springer Science & Business Media, 2009, vol. 146
- **BENDSOE, MARTIN PHILIP ; OLE SIGMUND.** Topology optimization: theory, methods, and applications. Springer Science & Business Media, 2004

- **TURING, A. M.** The chemical basis of morphogenesis. *Bulletin of mathematical biology,* 1990, vol. 52 (1-2), 153-197
- **MURRAY, J. D.** Mathematical biology II: spatial models and biomedical applications. Springer-Verlag, 2001, vol. 3
- **PEARSON, JOHN E.** Complex patterns in a simple system. *Science,* 1993, vol. 261 (5118), 189-192